# EUROPÄISCHE PATENTSCHRIFT

(11) **EP 1 479 912 B1**
(45) Veröffentlichungstag und Bekanntmachung des Hinweises auf die Patenterteilung: **31.05.2006**
(21) Anmeldenummer: 04012139.4
(22) Anmeldetag: 21.05.2004
(51) Int. Cl.: F04B 51/00, F04B 39/16, G07C 3/04, B01D 46/44

(54) **Kabelloses Betriebsüberwachungsgerät**
Cabelless device for operational monitoring of a machine
Appareil sans fil pour surveiller le fonctionnement d'une machine

(30) Priorität: 22.05.2003 DE 20308045 U
(43) Veröffentlichungstag der Anmeldung: 24.11.2004
(73) Patentinhaber: BAUER Kompressoren GmbH Systemwerk, 81477 München (DE)
(72) Erfinder: Christian Ziganek, 82069 Neufahrn (DE)
(74) Vertreter: Hering, Hartmut

(56) Entgegenhaltungen:
- WO-A-89/06843
- DE-A- 2 823 558
- DE-A- 3 135 732
- DE-A- 10 051 752
- DE-A- 10 150 260

## Beschreibung

Die Erfindung bezieht sich auf ein kabelloses Betriebsüberwachungsgerät mit integriertem Kleincomputer für Arbeitsmaschinen nach dem Oberbegriff des Anspruchs 1. Eine Vorrichtung zur Ermmittlung der Betriebszeit von Arbeits maschinen mit den Merkmalen des Oberbegriffs der Anspruchs 1 ist aus DE 101 50260A1 bekannt.

Bei Kompressoren, wie mobilen Kompressoraggregaten beispielsweise für die Tauchsportanwendung oder die Atemluftanwendung, wurden die Betriebsdaten des als Arbeitsmaschine dienenden Kompressoraggregats entweder vom Betreiber und Anwender direkt mittels entsprechenden Aufzeichnungen erfasst, so daß die Überwachung von der jeweiligen Sorgfalt der Anwender abhängig war. Bezüglich den Filterpatronen bei derartigen Arbeitsmaschinen wurde hinsichtlich der Filterpatronensättigung meist eine erfahrungsabhängige Abschätzung durch den Anwender vorgenommen, und aus Kostengründen wurden gegebenenfalls bei Einzelanwendungen konstruktiv aufwendige und kostenintensive zusätzliche Einrichtungen geschaffen, mittels denen sich der Sättigungsgrad der Filterpatrone beispielsweise ermitteln ließ. Hierfür kommen beispielsweise in der Filterpatrone integrierte Feuchtigkeitssensoren oder dergleichen in Betracht.

Bei Atemluftkompressoren handelt es sich bei der dort vorgesehenen Atemlufttrocknerpatrone um eine für die spätere Nutzung der Atemluft lebenswichtige Funktion, die möglichst so gestaltet werden sollte, daß sie weitgehend unabhängig von der Sorgfalt von Seiten des Anwenders ist. Hierzu musste man bisher einen kostenintensiven Zusatzaufwand betreiben, um den Sättigungsgrad einer solchen Atemlufttrocknerpatrone erfassen zu können.

Die Erfindung zielt daher darauf ab, ein kabelloses Betriebsüberwachungsgerät für derartige Arbeitsmaschinen, wie Kompressoren und dergleichen, bereitzustellen, welches eine kostengünstige und konstruktiv vereinfachte sowie autarke und zuverlässig arbeitende derartige Auslegung hat, daß weitgehend vom Anwender unabhängig die wesentlichen Funktions- und Betriebsdaten zu erfasst werden können und insbesondere auch von funktionswesentlichen Elementen einer solchen Arbeitsmaschine, wie Filtereinrichtungen oder dergleichen, diese Daten ermittelbar sind.

Nach der Erfindung wird hierzu ein kabelloses Betriebsüberwachungsgerät mit integriertem Kleincomputer für Arbeitsmaschinen, insbesondere Kompressoren, angegeben, welches die Merkmale des Patentanspruches 1 aufweist.

Nach der Erfindung wird somit ein autarkes, beispielsweise batteriebetriebenes, Kleingerät bereitgestellt, welches einen integrierten Kleincomputer umfasst, so daß hiermit mit möglichst geringem Kostenaufwand und auf konstruktiv einfache Weise alle wesentlichen Funktionsdaten und Funktionsparameter der entsprechend zugeordneten Arbeitsmaschine erfasst, gespeichert und angezeigt werden können. Durch die unmittelbare Kontaktberührung von Betriebsüberwachungsgerät und Arbeitsmaschine läßt sich eine von den Arbeitsphasen der Arbeitsmaschine selbsttätig abhängige Aktivierung des Betriebsüberwachungsgeräts erzielen. Somit gestattet das erfindungsgemäße Betriebsüberwachungsgerät, daß der Betreiber auf zuverlässige Weise über eventuell erforderliche Wartungsarbeiten hierdurch aufmerksam gemacht wird, und daß eventuell auszuwechselnde Teile der Arbeitsmaschine rechtzeitig vor einem Versagen ersetzt werden. Durch die Anzeigeeinrichtung des Betriebsüberwachungsgeräts können dann bedarfsabhängig jeweils die gewünschten funktionswesentlichen Betriebsdaten abgefragt und auf einfache Weise angezeigt werden. Ferner umfaßt das

Betriebsüberwachungsgerät auch eine Möglichkeit für die Überwachung des Sättigungszustandes einer Filterpatrone beispielsweise bei einem mobilen Kompressor für den Tauchsport. Mit Hilfe eines Temperatursensors werden die Temperaturdaten einer von Gas durchströmten Filterpatrone der Arbeitsmaschine erfasst und nach Maßgabe eines Vergleichs mit im Betriebsüberwachungsgerät vorgegebenen Daten über den Enddruck und/oder die Lieferleistung des Kompressors als Arbeitsmaschine und/oder die Gesamtaufnahmekapazität der Filterpatrone wird dann in dem Betriebsüberwachungsgerät der momentane Sättigungsgrad der Filterpatrone nach vorgegebenen Algorithmen ermittelt. Auf diese Weise gestattet das Betriebsüberwachungsgerät nach der Erfindung auch eine konstruktiv einfache, aber weitgehend genaue und zuverlässige Abschätzung des momentanen Sättigungsgrads einer Filterpatrone bei einem Kompressor als Arbeitsmaschine. Die Erfassung des momentanen Sättigungsgrads einer Filterpatrone läßt sich somit auf kostengünstige Weise realisieren. Vorzugsweise handelt es sich bei der Anzeigeeinrichtung um eine Flüssigkristall(LC)-Anzeige. Diese läßt sich insbesondere energiesparend betreiben, was im Hinblick auf die Autarkheit des Betriebsüberwachungsgeräts von Vorteil ist.

Zweckmäßigerweise erfasst der Temperatursensor die Temperatur der Filterpatrone beim Betrieb der Arbeitsmaschine zyklisch, so daß die entsprechend zyklisch zu erfassenden Daten für eine weitgehend genaue Bestimmung des momentanen Sättigungsgrads genutzt werden können, ohne daß das Betriebsüberwachungsgerät ständig im Vollleistungsbetrieb arbeitet. Hierdurch läßt sich somit auf energiesparende Weise eine Betriebsüberwachung auch über länger dauernde Arbeitsphasen der Arbeitsmaschine zuverlässig vornehmen.
Mittels der in dem Betriebsüberwachungsgerät vorgesehenen Anzeigeeinrichtung kann dann der jeweils erhaltene momentane Sättigungsgrad der Filterpatrone in einem solchen Anwendungsfall für den Betreiber leicht erfassbar angezeigt werden.

Vorzugsweise ist das kabellose Betriebsüberwachungsgerät nach der Erfindung derart ausgelegt, daß es nach Maßgabe der Betriebszeiten sowie der Arbeitsphasen und/oder dem Sättigungsgrad der Filterpatrone eine entsprechende Wartungsmeldung vorzugsweise über die Anzeigeeinrichtung abgeben kann. Natürlich sind auch andere Wartungsmeldungswarnungen, beispielsweise akustische oder dergleichen, möglich.

Das erfindungsgemäße Betriebsüberwachungsgerät ist vorzugsweise zum Einsatz und zum Anbringen an einem mobilen Kompressoraggregat bestimmt. Bei derartigen mobilen Kompressoraggregaten kann es sich um Tauchsportkompressoren, Atemluftkompressoren oder dergleichen handeln.

Speziell bei der Anwendung des erfindungsgemäßen Betriebsüberwachungsgerät bei einem Atemluftkompressor kann dieses Gerät auch zusätzlich den Zustand der Atemlufttrocknerpatrone überwachen, und den Sättigungsgrad derselben aufgrund der mittels des Betriebsüberwachungsgerät erfassten Daten ermitteln. Das Betriebsüberwachungsgerät kann dann gegebenenfalls eine entsprechende Wartungsmeldung oder Warnmeldung ausgeben. Da es sich bei Atemluftkompressoren bei der Atemlufttrocknerpatrone um ein lebenswichtiges Funktionsbauteil handelt, um eine ausreichend getrocknete Atemluft bereitzustellen, läßt sich dank der Erfindung die Betriebssicherheit eines solchen Atemluftkompressors mit Hilfe des Betriebsüberwachungsgeräts verbessern. Es lassen sich hierdurch möglicherweise lebensbedrohende Funktionsstörungen der dort vorgesehenen Atemluftrocknerpatrone zuverlässig erkennen, und der Betreiber kann auf entsprechend geeignete Weise rechtzeitig gewarnt werden.

Mit Hilfe des Betriebsüberwachungsgerät nach der Erfindung wird während des Kompressorbetriebs nach Maßgabe von vorgegebenen Parametern für den Enddruck und die Liefedeistung sowie der erfassten Temperatur in der Filterpatrone oder Trocknerpatrone die eingelagerte Feuchte mit Hilfe des integrierten Kleincomputers des Betriebsüberwachungsgeräts ermittelt.

Zusammenfassend ist es für die erfindungsgemäße Lösung wesentlich, daß das kabellose Betriebsüberwachungsgerät autark und unabhängig vom Betreiber auf konstruktiv einfache Weise und zuverlässig eine ständige Überwachung der Betriebsparameter während den Betriebsphasen der Arbeitsmaschine gestattet. Zusätzlich zu einer entsprechend geeigneten Anzeige an dem Betriebsüberwachungsgerät können auch Warnhinweise und/oder -meldungen angegeben werden. Hierdurch läßt sich die Funktionssicherheit der Arbeitsmaschine weitgehend unbeeinflusst durch den Betreiber verbessern.

Die Erfindung wird nachstehend an Hand einer bevorzugten Ausführungsform ohne beschränkenden Charakter unter Bezugnahme auf die beigefügte Zeichnung näher erläutert

Die einzige Figur der Zeichnung zeigt schematisch ein kabelloses Betriebsüberwachungsgerät in Verbindung mit einem Hochdruckkompressoraggregat als Arbeitsmaschine.

In dieser einzigen Figur ist ein kabelloses bzw. autark arbeitendes Betriebsüberwachungsgerät insgesamt mit 1 bezeichnet. Dieses Betriebsüberwachungsgerät 1 hat einen integrierten Kleincomputer. Ferner weist das Betriebsüberwachungsgerät 1 eine Anzeigeeinrichtung 2, wie eine Flüssigkristall(LC)-Anzeige auf, welche die Anzeige von verschiedenen Betriebsparametern mittels entsprechend zugeordneten Wählschaltern 3 für den Betreiber sichtbar gestattet. Das autarke Betriebsüberwachungsgerät 1 ist beispielsweise batteriebetrieben.

Das Betriebsüberwachungsgerät 1 erhält mehrere Eingangsgrößen, nämlich die Betriebsphasenerkennung, beispielsweise einen Kontaktberührungseingang 4, einen Eingang 5 für die Vorgabe der entsprechenden Parameter für den Enddruck eines zugeordneten Hochdruckkompressors 6 als Arbeitsmaschine, einen Eingang 7 für die Vorgabe der Parameter betreffend die Lieferleistung des Hochdruckkompressors 6 und einen Eingang 8, welcher mit einem Temperatursensor 9 verbunden ist, welcher beispielsweise einer Filterpatrone 10 zugeordnet ist, welche die im Hochdruckkompressor 6 geliefert Druckluft in entsprechender Weise filtert und/der trocknet.

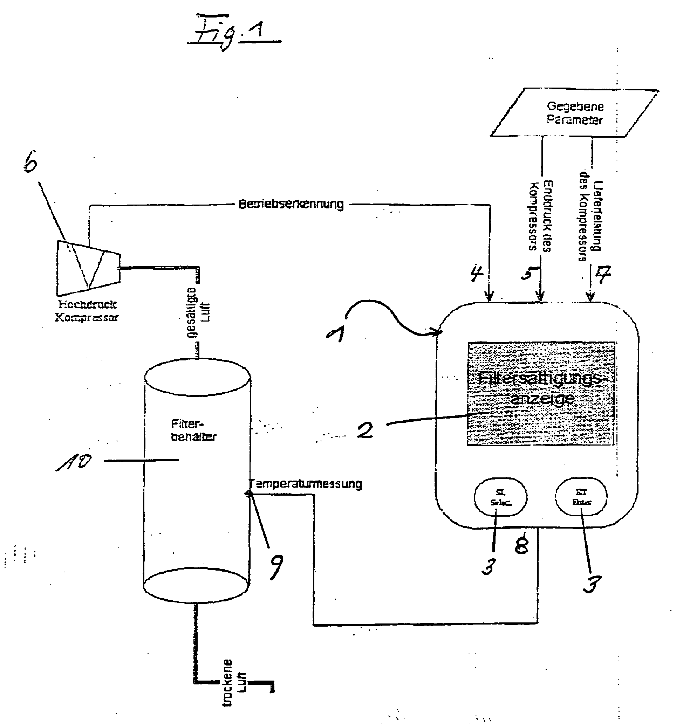

Bei dem Hochdruckkompressor 6 kann es sich beispielsweise um einen mobilen Kompressor, wie einen Tauchsportkompressor oder Atemluftkompressor oder dergleichen handeln. Der Hochdruckkompressor 6 und die Filterpatrone 10 sind in Figur 1 nur schematisch eingetragen.

Mit Hilfe des Temperatursensors 9 wird die Temperatur der Filterpatrone 10 oder gegebenenfalls einer Atemlufttrocknerpatrone erfasst, und an das Betriebsüberwachungsgerät 1 übergeben. Mit Hilfe des nicht näher dargestellten Kleincomputers in dem Betriebsüberwachungsgerät 1 wird dann nach Maßgabe der vorgegebenen Eingabegrößen für den Enddruck des Kompressors 6 und/oder die Liefermenge des Kompressors 6 ein entsprechender Sättigungszustand oder Sättigungsgrad der Filterpatrone 10 abgeschätzt und ermittelt. Durch einen Vergleich mit entsprechend vorgegebenen Solldaten kann dann in dem Betriebsüberwachungsgerät 1 eine Weiterverarbeitung dahingehend erfolgen, daß bei Überschreiten der Vorgabegrößen entsprechende Warnhinweise erzeugt werden, welche dann mit Hilfe der Anzeigeeinrichtung 2 angezeigt werden. Gegebenenfalls können auch mit Betriebsüberwachungsgerät 1 weitere Warneinrichtungen, wie akustische Wameinrichtungen, verbunden sein. Durch entsprechende Betätigung der Wählschalter 3 können beispielsweise auch die Arbeitsphasenzeiten des Hochdruckkompressors 6 angezeigt werden, welche über den Eingang 4 für die Betriebsphasenerkennung mit Hilfe des Kleincomputers in dem Betriebsüberwachungsgerät 1 erfaßt und in diesem gespeichert werden.

Gegebenenfalls kann das Betriebsüberwachungsgerät 1 auch noch weitere Einzelheiten über die Betriebsphasen erfassen und gegebenenfalls zur Anzeige bringen.

Bei der Anzeigeeinrichtung 2 handelt es sich also vorzugsweise um eine Multifunktionsanzeige der LC-Bauart.

Das Betriebsüberwachungsgerät 1 ist autark und kompakt ausgelegt und wird zweckmäßigerweise durch die Kontaktberührung mit dem Hochdruckkompressor 6 als Arbeitsmaschine selbsttätig aktiviert.

Wie die vorstehenden Ausführungen gezeigt haben, gestattet somit das erfindungsgemäße Betriebsüberwachungsgerät 1 nicht nur die Erfassung der Betriebsphasen der Arbeitsmaschine (Hochdruckkompressor 6), sondern auch eine kostengünstige und funktionszuverlässige Möglichkeit, kritische Bauteile in einer Arbeitsmaschine, wie Filterpatronen 10 oder dergleichen, fortlaufend zu überwachen und eventuell auftretende kritische Zustände dieser Zusatzaggregate zu erkennen.

Selbstverständlich ist die Erfindung nicht auf die voranstehend beschriebenen Einzelheiten der an Hand der einzigen Figur erläuterten, bevorzugten Ausführungsform beschränkt, sondern es sind zahlreiche Abänderungen und Modifikationen möglich, die der Fachmann im Bedarfsfall treffen wird, ohne den Erfindungsgedanken zu verlassen.

## Patentansprüche

1. Kabelloses Betriebsüberwachungsgerät mit integriertem Kleincomputer für Arbeitsmaschinen, insbesondere Kompressoren welches mit Kontaktberührung an der Arbeitsmaschine (6) zur selbständigen Aktivierung während der Betriebsphasen der Arbeitsmaschine (6) festlegbar ist, Betriebszeiten erfasst und an einer am Betriebsüberwachungsgerät (1) vorgesehenen Anzeigeneinrichtung (2) die erfassten Daten sichtbar anzeigbar sind, **dadurch gekennzeichnet, dass** das Betriebsüberwachungsgerät (1) über einen Temperatursensor (9) die Temperaturdaten einer von Gas durchströmten Filterpatrone (10) der Arbeitsmaschine (6) erhält und nach Maßgabe eines Vergleichs mit im Betriebsüberwachungsgerät (1) vorgebbaren Daten über den Enddruck und/oder die Lieferleistung der Arbeitsmaschine (6) ünd/oder die Gesamtaufnahmekapazität der Filterpatrone (10) der momentane Sättigungsgrad der Filterpatrone (10) ermittelbar ist.

2. Kabelloses Betriebsüberwachungsgerät nach Anspruch 1, **dadurch gekennzeichnet, dass** die Anzeigeeinrichtung (2) eine Flüssigkristall (LC)-Anzeige ist.

3. Kabelloses Betriebsüberwachungsgerät nach Anspruch 1, **dadurch gekennzeichnet, dass** mittels des Temperatursensors (9) die Temperatur der Filterpatrone (10) beim Betrieb der Arbeitsmaschine (6) zyklisch erfassbar ist.

4. Kabelloses Betriebsüberwachungsgerät nach Anspruch 1 oder 3,, **dadurch gekennzeichnet, dass** mittels der Anzeigeeinrichtung (2) der momentane Sättigungsgrad der Filterpatrone (10) anzeigbar ist.

5. Kabelloses Betriebsüberwachungsgerät nach einem der Ansprüche 1 bis 4, **dadurch gekennzeichnet, dass** von dem Betriebsüberwachungsgerät (1) nach Maßgabe der Betriebszeiten und/oder dem Sättigungsgrad der Filterpatrone (10) eine Wartungsmeldung abgebbar ist.

6. Kabelloses Betriebsüberwachungsgerät nach einem der Ansprüche 1 bis 5, **dadurch gekennzeichnet, dass** das Betriebsüberwachungsgerät (1) an einem mobilen Kompressoraggregat anbringbar ist.

7. Kabelloses Betriebsüberwachungsgerät nach Anspruch 6, **dadurch gekennzeichnet, dass** das das mobile Kompressoraggregat ein Tauchsportkompressor, ein Atemluftkompressor oder dergleichen ist.

8. Kabelloses Betriebsüberwachungsgerät nach einem der Ansprüche 1 bis 7, **dadurch gekennzeichnet, dass** mittels des Betriebsüberwachungsgeräts (1) bei einem Atemluftkompressor auch der Sättigungsgrad der Atemlufttrocknerpatrone überwachbar und gegebenenfalls eine entsprechende Wartungs- und/oder Warnmeldung ausgebbar ist.

## Claims

1. Cordless operation monitor with integral microcomputer for working machines, compressors in particular, which may be attached to the working machine (6) with contact touch for automatic activation during the operating phases of the working machine (6), captures running times and the captured data can be visibly displayed on an indicating device (2) provided on the operation monitor (1), **characterised in that** the operation monitor (1) receives via a temperature sensor (9) the temperature data from a filter cartridge (10) with gas flow in the working machine (6) and that, on the basis of comparison with data which may be specified in the operation monitor (1) concerning the discharge pressure and/or volumetric output of the working machine (6) and/or the total absorption capacity of the filter cartridge (10) the current degree of saturation of the filter cartridge (10) can be determined.

2. Cordless operation monitor according to Claim 1, **characterised in that** the indicating device (2) is a liquid crystal display (LCD).

3. Cordless operation monitor according to Claim 1, **characterised in that** the temperature of the filter cartridge (10) can be cyclically captured by the temperature sensor (9) while the working machine (6) operates.

4. Cordless operation monitor according to Claim 1 or 3, **characterised in that** the current degree of saturation of the filter cartridge (10) can be indicated by the indicating device (2).

5. Cordless operation monitor according to one of Claims 1 to 4, **characterised in that** a warning message can be output by the operation monitor (1) according to the running times and/or degree of saturation of the filter cartridge (10).

6. Cordless operation monitor according to one of Claims 1 to 5, **characterised in that** the operation monitor (1) is attachable to a mobile compressor unit.

7. Cordless operation monitor according to Claim 6, **characterised in that** the mobile compressor unit is a diving compressor, a breathing-air compressor or similar.

8. Cordless operation monitor according to one of Claims 1 to 7, **characterised in that** in the case of a breathing-air compressor the degree of saturation of the air dryer cartridge can also be monitored and if appropriate a suitable maintenance notice and/or warning output by the operation monitor (1).

## Revendications

1. Appareil autographique sans câble avec mini-ordinateur pour des machines productrices à travail, en particulier pour des compresseurs, qui peut être bloqué en position de contact sur la machine productrice à travail (6) dans le but d'une activation autonome au cours des phases de service de la machine productrice à travail (6), qui saisit la durée de service et qui affiche les données saisies de manière visible sur un dispositif d'affichage (2) prévu sur l'appareil autographique, **caractérisé en ce que** l'appareil autographique (1) reçoit les données de température d'une cartouche filtrante (10) de la machine productrice à travail (6), cartouche filtrante qui est traversée par du gaz, par l'intermédiaire d'un capteur de température (9) et que le degré de saturation momentané de la cartouche filtrante (10) peut être déterminé selon une comparaison aux données relatives à la pression terminale et/ou la puissance débitée de la machine productrice à travail (6) et/ou à la capacité de réception totale de la cartouche filtrante (10), pouvant être spécifiées dans l'appareil autographique (1).

2. Appareil autographique sans câble suivant la revendication 1, **caractérisé en ce que** le dispositif d'affichage (2) est un affichage à cristaux liquides (LC).

3. Appareil autographique sans câble suivant la revendication 1, **caractérisé en ce que** la température de la cartouche filtrante (10) peut être captée de manière cyclique en service de la machine productrice à travail au moyen du capteur de température (9).

4. Appareil autographique sans câble suivant la revendication 1 ou 3, **caractérisé en ce que** le degré de saturation momentané de la cartouche filtrante (10) peut être affiché au moyen du dispositif d'affichage (2).

5. Appareil autographique sans câble suivant une des revendications 1 à 4, **caractérisé en ce qu'**un message d'entretien eut être émis par l'appareil autographique selon la durée de service et/ou le degré de saturation de la cartouche filtrante (10).

6. Appareil autographique sans câble suivant une des revendications 1 à 5, **caractérisé en ce que** l'appareil autographique (1) peut être fixé sur un groupe compresseur mobile.

7. Appareil autographique sans câble suivant la revendication 6, **caractérisé en ce que** le groupe compresseur mobile est un compresseur de plongée, un compresseur d'air respiratoire ou similaire.

8. Appareil autographique sans câble suivant une des revendications 1 à 7, **caractérisé en ce que**, dans le cas d'un compresseur d'air respiratoire, le degré de saturation de la cartouche du séchoir d'air respiratoire peut également être surveillé et que, le cas échéant, un message d'entretien et/ou d'avertissement peut être émis.
